# EUROPEAN PATENT SPECIFICATION

(11) **EP 1 000 845 B1**
(45) Date of publication and mention of the grant of the patent: **08.02.2006**
(21) Application number: 99122559.0
(22) Date of filing: 12.11.1999
(51) Int. Cl.: B62K 3/00, B62M 7/12

(54) **Motorcycle**
Motorrad
Motocyclette

(30) Priority: 12.11.1998 JP 32208198
(43) Date of publication of application: 17.05.2000
(73) Proprietor: YAMAHA HATSUDOKI KABUSHIKI KAISHA, Iwata-shi Shizuoka-ken (JP)
(72) Inventor: Trigg, Robert V., c/o Yamaha Motor Europe N.V., 1119 NC Schiphol-Rijk (NL); Dumas, Francois-Marie, 92240 Malakoff (FR)
(74) Representative: Grünecker, Kinkeldey, Stockmair & Schwanhäusser Anwaltssozietät

(56) References cited:
- EP-A- 0 624 512
- EP-A- 0 696 537
- DE-A- 19 542 074
- DE-U- 29 509 792
- FR-A- 2 716 859

## Description

This invention relates to a motorcycle for a rider to ride in a standing posture on a planar footboard disposed between front and rear wheels.

The above-described, stand-riding type of motorcycles of prior art has been proposed for example in JP-A-60-56684.

The stand-riding type of motorcycle shown in the publication employs a constitution in which a low-height, planar footboard is disposed between a single front wheel and a single wheel or between the single front wheel and two, right and left rear wheels, and the rider stands on the footboard to drive the vehicle.

The diameter of the front and rear wheels is small so that the upper edges of the wheels are lower than the knee height of the rider standing on the ground. The footboard is disposed in about the same height as the wheel shaft height of the front and rear wheels.

The engine of the motorcycle is disposed at a position behind and above the footboard when the vehicle has a single rear wheel, and when the vehicle has two rear wheels, the engine is disposed between the rear wheels.

A problem with the stand-riding type of motorcycle described above is the different feeling in driving as compared with that of bicycles due to the very small diameter of the wheels.

Another problem with such a motorcycle is the engine mounting position. That is to say, in the case of a single rear wheel, since the engine is disposed behind and above the rear part of the footboard, the footboard becomes short in the front-rear direction, and the space for the feet becomes narrow. If the engine is disposed between the paired rear wheels in order to elongate the footboard in the front-rear direction, the vehicle width increases and very careful driving is required especially as when driving by the side of jammed cars.

A similar vehicle is disclosed in document FR A 2 716 859.

Accordingly, it is an objective of the present invention to provide a motorcycle as indicated above that is compact in the vehicle width direction as well as permits to form a foot placing space widely in the front rear direction and provides ride feelings similar to that with a bicycle.

According to the present invention, this objective is performed by the motorcycle having the features of claim 1.

In order to enhance the driving comfort of a rider, it is advantageous when the footboard being arranged such that the upper edges of the front and rear wheels are located approximately at the same height as the knees of a standing rider.

When a first distance between the footboard and a ground surface is shorter than a second distance between each wheel shaft and the ground surface, the riding stability is improved because the center of gravity is located at an optimal position.

Moreover, it is possible that a power unit is accommodated in either the front wheel or the rear wheel.

Therefore, one motorcycle is constituted as follows: The wheels and the footboard are arranged so that the knee height of the rider standing on the footboard is about the same as the height of the upper edges of the wheels, that the footboard height is lower than the wheel shaft height above the road surface, and that the overall width of the vehicle body excluding the steering handlebars is made narrower than the width of the hip of the rider.

According to the invention, the outside diameter of the wheel is nearly the same as that of bicycles for adults, and the vehicle body shape resembles that of the bicycle.

Therefore, ride feeling is almost the same as with the bicycle and the ride stability is good. Although the wheel diameter is large, since the footboard height from the road surface is low, retracting the ground-contact foot when starting the driving and placing the foot on the ground when stopping are made very easily, and these actions can be made without bending and stretching knees by a large amount. Moreover, because of the small vehicle width, it is possible to drive through jammed cars, and also it is very easy to push-walk the vehicle. As the wheel diameter is large, the roomy space formed radially inside the wheel is utilized to mount the power unit without interfering with the footboard. As a result, the degree of freedom in designing the footboard increases, for example to elongate the footboard in the front-rear direction.

Another motorcycle according to the invention comprises a hip support member extending upward from the rear part of the footboard.

This makes it possible to support the hip of the rider standing on the footboard with the hip support member and to perform operation of banking the vehicle and the rider together as a single body as on a curved road in a stabilized manner.

A further motorcycle according to the invention is arranged such that the power source of the power unit is an engine and the power transmission train from the engine to the wheel and auxiliary devices for the engine are all disposed radially inside the wheel.

With this invention, the engine can be mounted while a constitution is employed in which the footboard is made long in the front-rear direction.

A still further motorcycle according to the invention is arranged such that the power source of the power unit is an electric motor and the power transmission train from the engine to the wheel and auxiliary devices for the electric motor are all disposed radially inside the wheel.

With this invention, the electric motor that is relatively low in noise and vibration can be mounted while the constitution is employed in which the footboard is made long in the front-rear direction.

Other preferred embodiments of the present invention are laid down in further dependent claims.

In the following, the present invention is explained in greater detail with respect to several embodiments thereof in conjunction with the accompanying drawings, wherein:
FIG. 1 is a side view showing the vehicle body constitution of a motorcycle according to the invention;
FIG. 2 is a plan view of the vehicle body frame;
FIG. 3 is a perspective view showing the state with a vehicle body cover attached;
FIG. 4 is a side view of the motorcycle when it assumes the second form of embodiment;
FIG. 5 is a side view of the rear wheel as seen from the right hand side of the vehicle body with the cover removed;
FIG. 6 is a side view showing the exposed inside of the transmission case, muffler, and the air cleaner of the engine;
FIG. 7 is a side view of the engine and the auxiliary devices as seen from the left hand side of the vehicle body;
FIG. 8 is an oblique view of general constitution of the transmission;
FIG. 9 shows a cross section taken along the line IX-IX in FIG. 5;
FIG. 10 is a side view of a vehicle body of a motorcycle with the electric motor type power unit:
FIG. 11 shows a vertical cross section of the rear wheel;
FIG. 12 is a side view of the central part of the disk type wheel as seen from the vehicle body left hand side; and
FIG. 13 is a side view of the power unit.

### First Embodiment

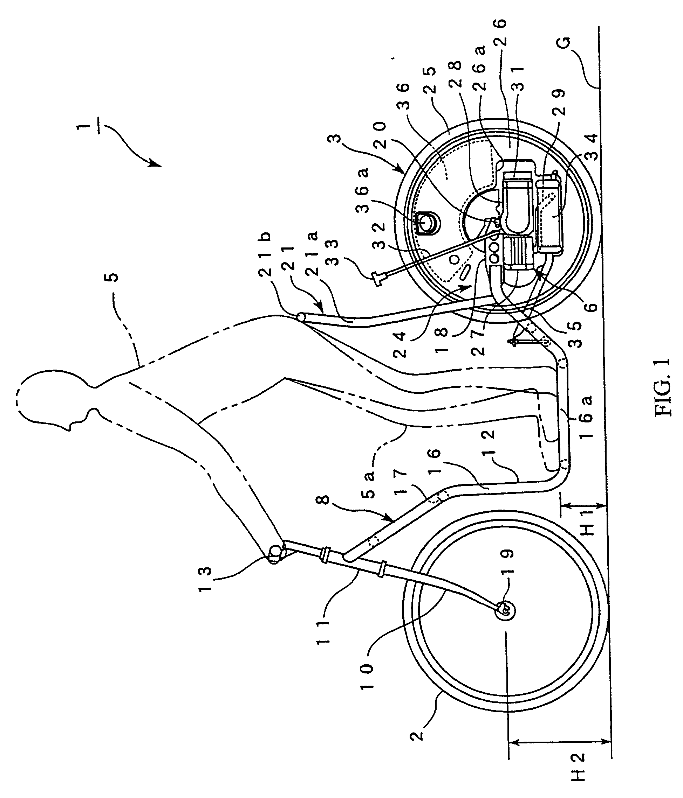

A motorcycle as the first embodiment of the invention will be hereinafter described in reference to FIGs. 1 to 3.

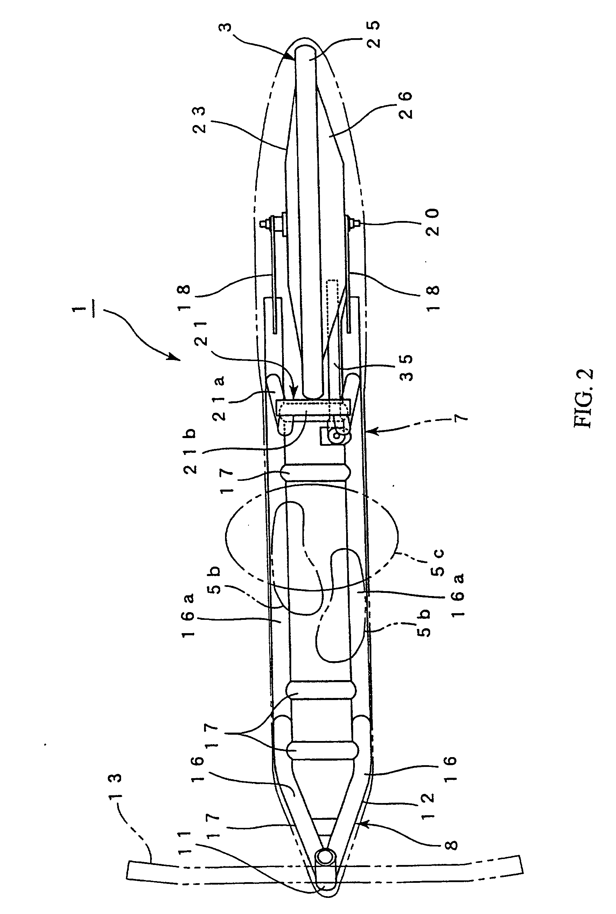

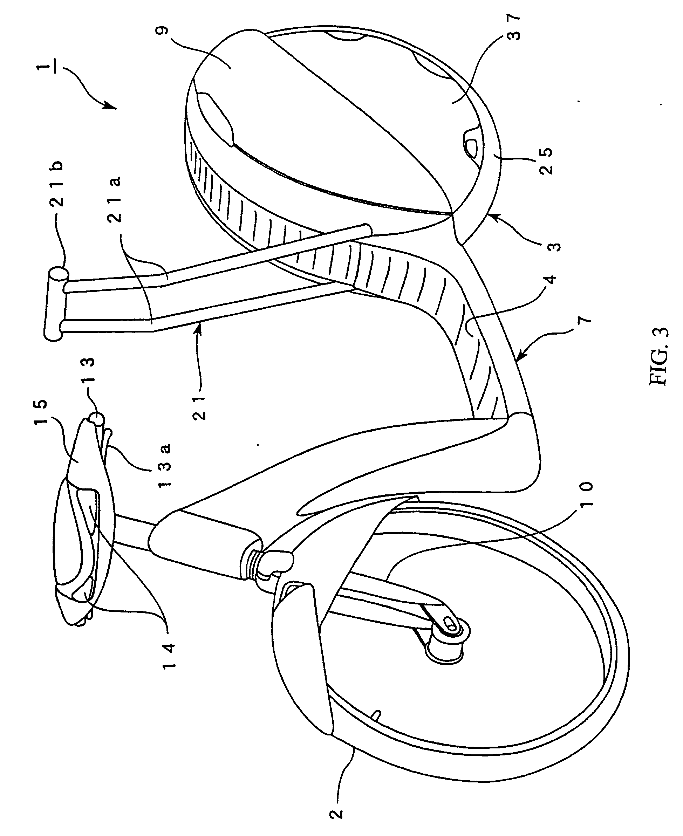

FIG. 1 is a side view showing the vehicle body constitution of a motorcycle according to the present invention. FIG. 2 is a plan view of the vehicle body frame. FIG. 3 is a perspective view showing the state with a vehicle body cover being attached.

These figures show a motorcycle 1 according to this embodiment. The motorcycle 1 employs a constitution in which a footboard 4 (See FIG. 3) is provided between a front wheel 2 and a rear wheel 3, a rider 5 rides in the standing posture on the footboard 4, and the vehicle is driven with the power of an engine 6 disposed in the rear wheel 3.

The front wheel 2 and the rear wheel 3 are made with the same outside diameter each other. The outside diameter of the wheels in this embodiment is set nearly the same as that of 26-inch wheel for bicycles.

The footboard 4 in this embodiment is formed integrally with a vehicle body cover 7 as shown in FIG. 3. The vehicle body cover 7 is formed to cover the rear wheel 3 and a vehicle body frame 8 shown in FIG. 1. Part of the vehicle body cover 7 for the rear wheel 3 is formed to generally cover the upper half of the rear wheel 3 and is provided with detachable sub-cover 9 on the left hand side of the vehicle body. With this constitution, a fuel tank filler inlet, to be described later, is exposed when the sub-cover 9 is removed.

The vehicle body frame 8 is constituted with a head pipe 11 for rotatably supporting a front fork 10 to which is attached the front wheel 2, and a main frame 12 extending from the head pipe 11 to the rear of the vehicle body and supporting at its rear end the rear wheel 3. Steering handlebars 13 are attached to the upper end of the front fork 10. To the handlebars 13 are attached, as shown in FIG. 3, a handlebar cover 15 having a headlight 14, a throttle grip or thumb throttle (not shown), and a brake lever 13a. The throttle grip or thumb throttle is for operating a throttle valve of a carburetor which will be described later.

The main frame 12 as shown in FIG. 2 is constituted with main pipes 16 paired right and left in the vehicle width direction and interconnected through a plurality of cross pipes 17. At the rear ends of the main pipes 16 are provided rear wheel supporting brackets 18 to which is attached the rear wheel 3. Although not shown, a side stand is attached to the rear end part of the main pipe 16 on the left hand side of the vehicle body.

The main pipes 16 form a horizontal extension part 16a for supporting the footboard 4 between the front wheel 2 and the rear wheel 3. The horizontal extension part 16a extends in the front-rear direction of the vehicle at a low height near the ground surface G. The vertical position of the horizontal extension part 16a is set so that the distance H1 between the ground surface G and the footboard 4 disposed on the horizontal extension part 16a is about a half of the distance H2 between the ground surface G and the wheel shafts 19 and 20 of the front and rear wheels 2 and 3, respectively. Forming the horizontal extension part 16a in this way positions the knee 5a of a rider 5 standing on the footboard 4 and the upper edges of the front and rear wheels 2, 3 are nearly at the same height.

The dimension in the vehicle width direction of the main frame 12 is set as shown in FIG. 2 to be the same as the lateral width of both feet 5b of the rider 5 when the feet 5b are placed side by side, and to be smaller than the width of the hip 5c of the rider 5. Employing this constitution makes it possible to form the footboard 4 with a lateral width that permits the rider 5 to ride with his or her feet 5b placed side by side. The main frame 12 is formed, as seen in plan view of FIG. 2, with its width gradually increasing from its front part connected to the head pipe toward the rear, and with its part corresponding to the horizontal extension part 16a in a straight shape in the front-rear direction. Since the rear wheel 3 is attached to the rear part of the main frame 12 in a position between two main pipes 16, the overall vehicle body width of the motorcycle 1 excluding the steering handlebars 13 is made smaller than the width of the hip 5c of the rider 5.

A hip support member 21 is attached to a relatively high position, in the rear part and in front of a rear wheel support bracket 18, on the main pipe 16. The hip support member 21 is constituted with two pipes 21 a extending from the main pipes 16 upward, and a lateral pipe 21 b welded to the upper ends of the two pipes. Disposing the hip support member 21 in the rear end part of the main pipes 16 makes it possible to avoid mutual interference of the hip support member 21 and the footboard 4, and to form the footboard 4 elongate in the front-rear direction of the vehicle body.

The rear wheel 3 is provided with a disk type wheel 23 (See FIG. 2) located on the right hand side of the vehicle body and a power unit 24 (See FIG. 1) having an engine 6. The disk type wheel 23 is rotatably supported with the wheel shaft 20 and its outer circumferential portion is provided with a tire 25. The wheel shaft 20 is secured to the rear wheel support bracket 18 of the vehicle body frame 8.

The power unit 24 comprises the engine 6 of a two-cylinder, air-cooled type; auxiliary devices for the engine 6; and a support bracket 26 for the power unit. The power unit 24 is housed radially inside the rear wheel 3 and supported with the wheel shaft 20 and the rear wheel support bracket 18. The engine 6 employs a constitution in which a cylinder 27 and a crankcase 28 are placed one after the other in the front-rear direction of the vehicle body. A carburetor (not shown) is connected to the crankcase 28. An exhaust pipe 29 is connected to the underside of the cylinder 27.

The carburetor is connected to the rear part of the crankcase 28 through a reed valve (not shown). An air cleaner 31 is connected to the carburetor.

A throttle valve provided in the carburetor is connected to the throttle grip or thumb throttle on the steering handle bar 13 through a cable (not shown) routed along the main pipe 16.

In FIG. 1 is shown a pipe 32, extending upwardly along the forward direction from the upper front part of the crankcase 28, for supporting a starter handle 33 of a recoil starter. A cable interconnecting the starter handle 33 and the engine side of the recoil starter is passed through the inside of the pipe 32. The engine 6 is started by pulling up the starter handle 33.

The engine 6 is mounted so that the axis of its crankshaft (not shown) is supported to direct parallel to the vehicle width direction, with a speed reduction gears (not shown) attached to the vehicle body's right hand side of the crankcase 28, Rotation of the crankshaft is transmitted to the disk type wheel 23 through the reduction gears, and a belt stretched between a drive pulley of the transmission and a driven pulley (not shown) located inside the disk type wheel 23.

A muffler 34 located below the crankcase 28 is connected to the downstream end of the exhaust pipe 29. The muffler 34 is supported, at its vehicle body forward end side, on the vehicle body frame 8 through a stay 35.

The power unit bracket 26 is made in a disk shape with an opening 26a formed in its central part for inserting the engine 6 and the muffler 34. A fuel tank 36 is disposed between the upper part of the bracket 26 and the disk type wheel 23. The fuel tank 36 is supported with the power unit bracket 26 and its fuel filler inlet 36a is made to project from the bracket 26 to the left hand side of the vehicle body. In FIG. 2, the fuel filler inlet 36a, the engine 6, and the pipe 32 for the recoil starter are omitted.

A cover 37 shown in FIG. 3 and formed to cover the left hand side of the rear wheel 3 excluding the tire 25 is attached to the power unit bracket 26 in the state of the rear wheel 3 attached to the vehicle body frame 8.

The front fork 10 shown in FIG. 3 is different in its structure for supporting the wheel shaft 19 from that shown in FIG. 1 so that its rigidity is high. Employing this structure makes it possible to use the rear wheel 3 shown in FIGs. 1 and 2 also as the front wheel.

The motorcycle 1 constituted as described above is driven by the rider 5 standing on the footboard 4 in the upright posture and gripping the steering handlebars 13. During driving, the hip 5c of the rider 5 can be supported with the hip support member 21.

The front and rear wheels 2 and 3 are nearly the same in outside diameter as those for the bicycles for adults. The vehicle width is narrower than the width of the hip 5c of the rider 5: The vehicle body shape is also resembles that of the bicycle. Therefore, feeling during driving is almost the same as that with the bicycle.

Since the engine 6, the power transmitting train from the engine 6 to the rear wheel 3, and all the auxiliary devices for the engine are mounted radially inside the rear wheel 3, the power unit 24 constituted with the engine 6 and the auxiliary devices does not interfere with the footboard 4, so that the footboard 4 can be formed long along the front-rear direction of the vehicle body between the front and rear wheels 2 and 3. Therefore, the rider 5 can ride on the footboard 4 in a stance with both feet 5b wide apart in the front-rear direction of the vehicle body.

### Second Embodiment

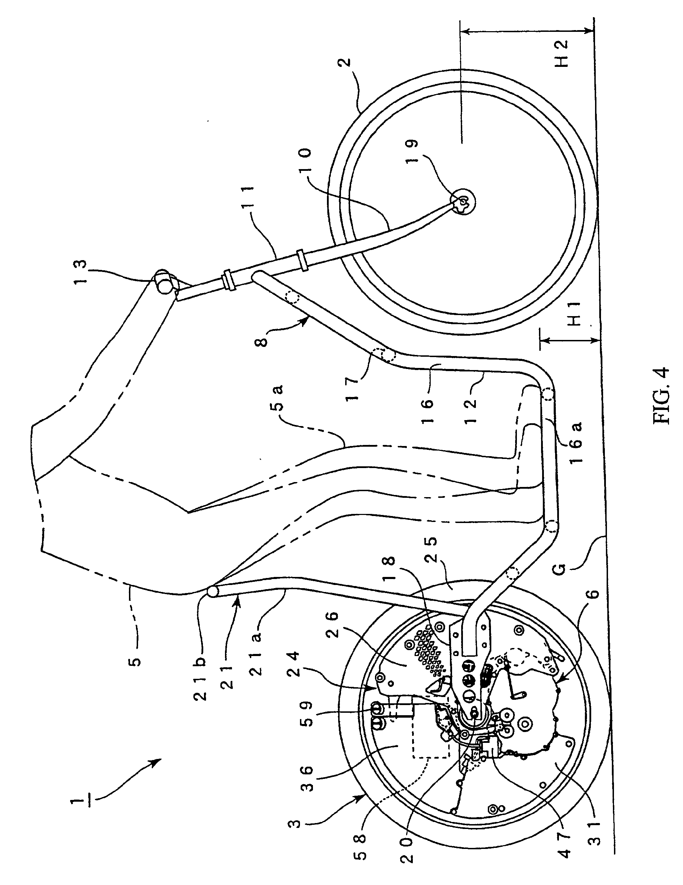

The power unit may be formed as shown in FIGs. 4 to 9.

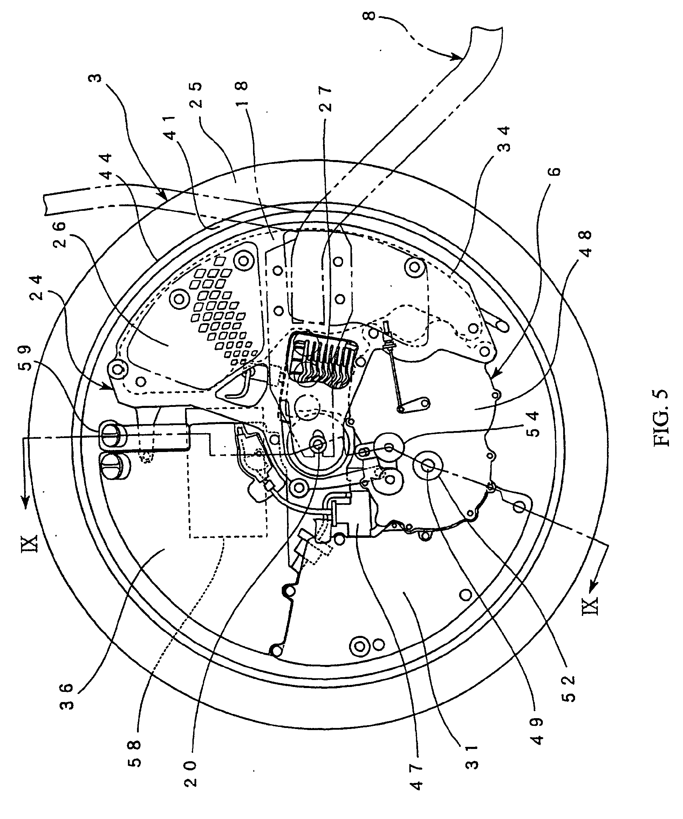

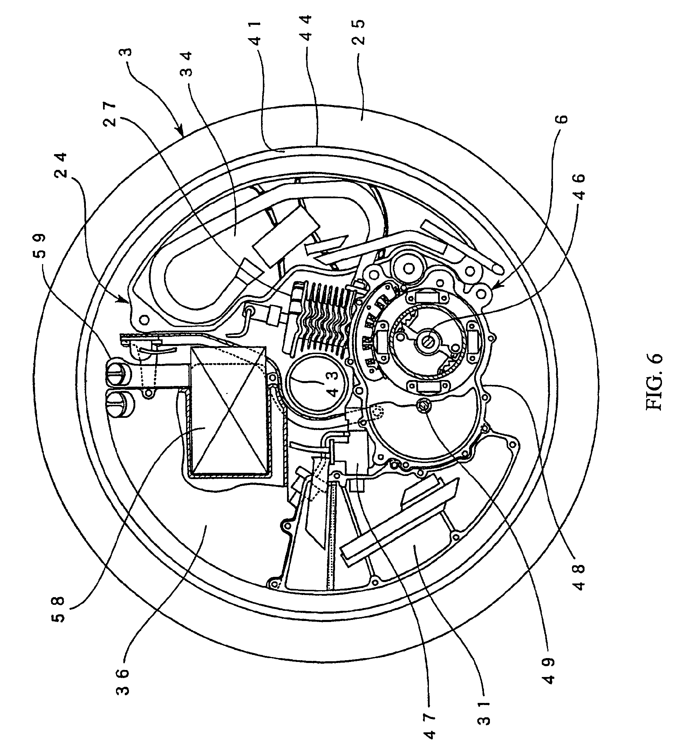

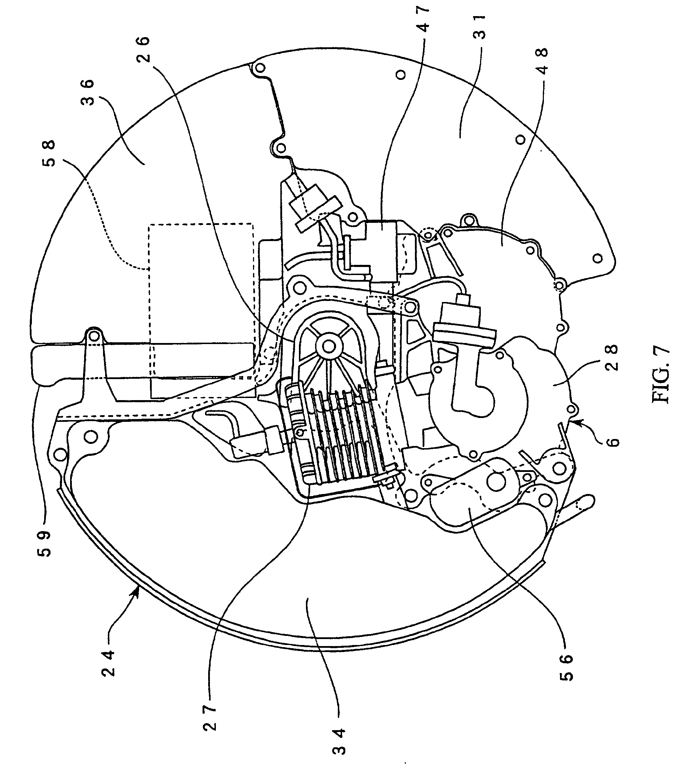

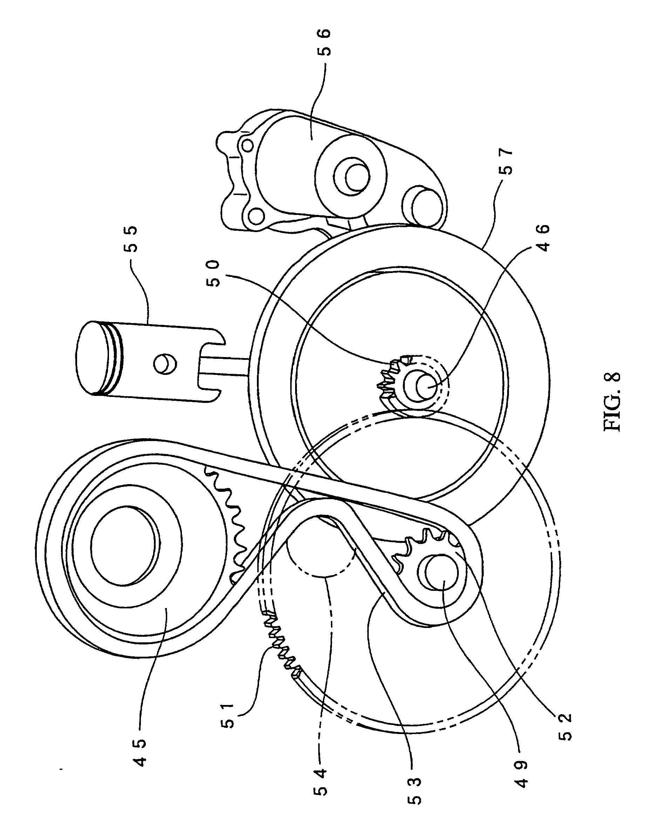

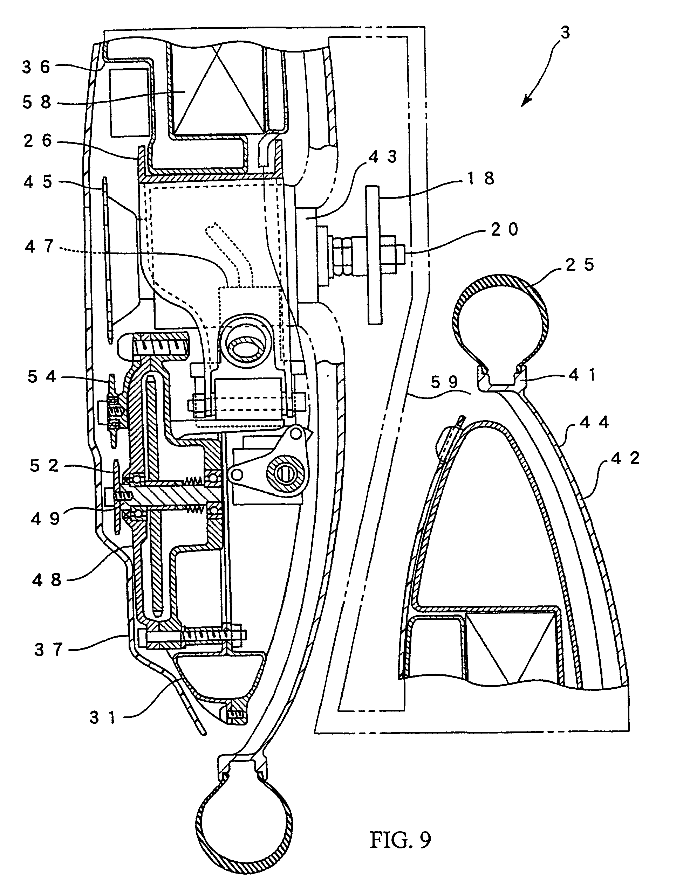

FIG. 4 is a side view of the motorcycle when it assumes the second embodiment. FIG. 5 is a side view of the rear wheel as seen from the right hand side of the vehicle body with the cover being removed. FIG. 6 is a side view showing the exposed inside of the transmission case, muffler, and the air cleaner of the engine. FIG. 7 is a side view of the engine and the auxiliary devices as seen from the left hand side of the vehicle body. FIG. 8 is an oblique view of general constitution of the transmission. FIG. 9 shows a cross section taken along the line IX-IX in FIG. 5. In these drawings, components that are the same as or similar to those shown in FIGs. 1 to 3 are provided with the same symbols and their detailed descriptions are omitted.

As shown in FIG. 9, the rear wheel 3 of the motorcycle 1 of this embodiment comprises a disk type wheel 44 integrally comprising a rim 41, spoke 42, and a hub 43. The wheel 44 is supported through the wheel shaft 20 on the rear wheel support bracket 18 so that the spoke 42 is located on the left hand side (right hand side in the figure) of the vehicle body. The rear wheel 3 is rotated relative to the wheel shaft 20 as the power of the power unit 24, to be described later, is transmitted to the driven sprocket 45 secured to the end, on the right hand side of the vehicle body, of the hub 43. Incidentally, FIG. 9 is shown in the state of the rear wheel support bracket 18 and the end portion of the wheel shaft 20 on the right hand side of the vehicle body being omitted.

Also in the case this embodiment is employed, the power unit 24 is housed radially inside the rear wheel 3 and covered from the side of the vehicle body with the cover 37 (See FIG. 9). As shown in FIGs. 4 and 5, the power unit 24 including the engine 6 and all its auxiliary devices is supported with the power unit bracket 26 of a sector shape as seen in side view and secured to the rear wheel support bracket 18 located on the right hand side of the vehicle body.

The engine 6 of this embodiment is disposed in front, with respect to the vehicle body, of the wheel shaft 20, with the cylinder 27 axis sloped up forward, and with the crankcase 28 (See FIG. 7) disposed below the wheel shaft 20. Also in this embodiment, the engine 6 is supported so that the axis of the crankshaft 46 (See FIG. 6) is parallel to the vehicle width direction.

The cylinder 27 is connected, at its vehicle body front side, to the muffler 34 and, at its vehicle body rear side, to a carburetor 47. The muffler 34 is disposed between the power unit bracket 26 and the disk type wheel 44, and supported with the power unit bracket 26. The carburetor 47 is constituted similarly to that in the first embodiment in which the throttle valve in the carburetor is opened and closed by the operation of the throttle grip or thumb throttle on the steering handlebar 13.

As shown in FIG. 5, the crankcase 28 is provided with a transmission case 48 on the right hand side of the vehicle body, with an output shaft 49 projecting from the transmission case 48. The engine 6 is supported with the power unit bracket 26 by securing the vehicle body front side end of the crankcase 28 and the upper part of the vehicle body rear side end of the transmission case 48 to the power unit bracket 26.

As shown in FIG. 8, the output shaft 49 is gear-connected to the crankshaft 46 through gears 50 and 51, and is provided with a drive sprocket 52. The drive sprocket 52 is connected through a chain 53 to the driven sprocket 45. As shown also in FIG. 8, a tension pulley 54 is disposed between the drive sprocket 52 and the driven sprocket 45. FIG. 8 also shows a piston 55 of the engine 6, and a starter motor 56. The starter motor 56 is constituted to rotate a ring gear 57 connected to the crankshaft 46.

The air cleaner 31 is disposed, with respect to the vehicle body, behind the transmission case 48, and the fuel tank 36 is disposed above the air cleaner 31. The fuel tank 36 is supported with the power unit bracket 26. The air cleaner 31 is supported with the transmission case 48 and the fuel tank 36. In this embodiment, a battery 58 and an oil tank 59 are supported with the fuel tank 36.

The same effect as with the first embodiment is obtained with the constitution of the rear wheel 3 described with this embodiment.

### Third Embodiment

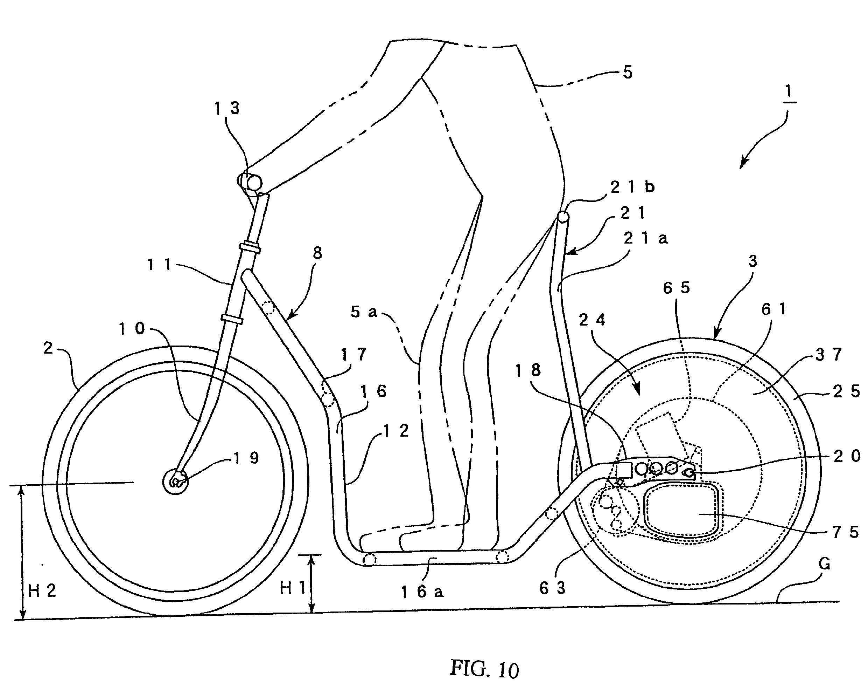

The power source of the power unit may be an electric motor. An embodiment using the electric motor type power unit will be described in detail in reference to FIGs. 10 to 13.

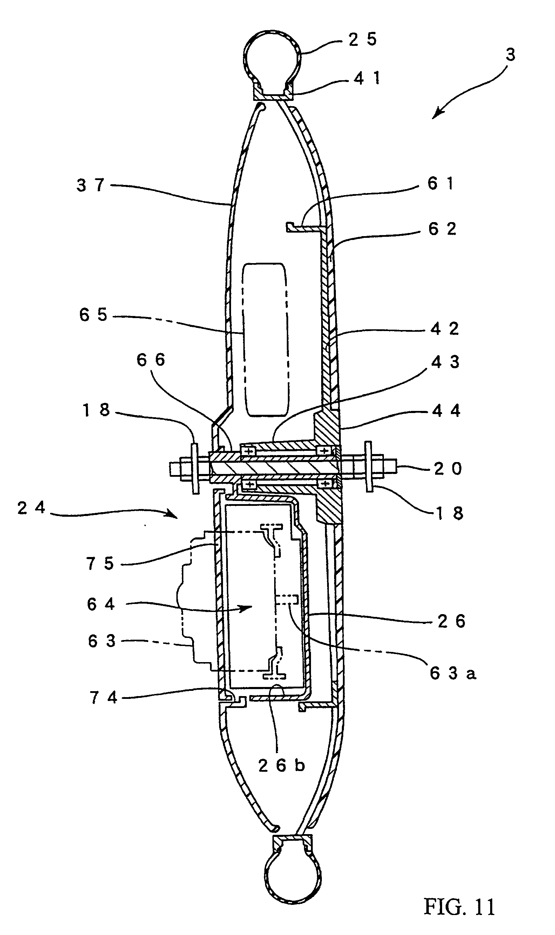

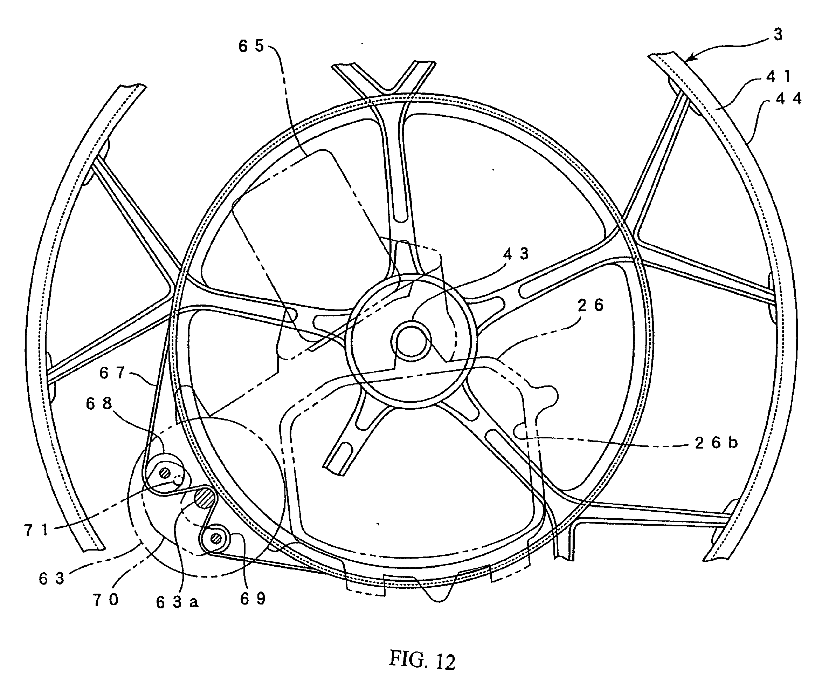

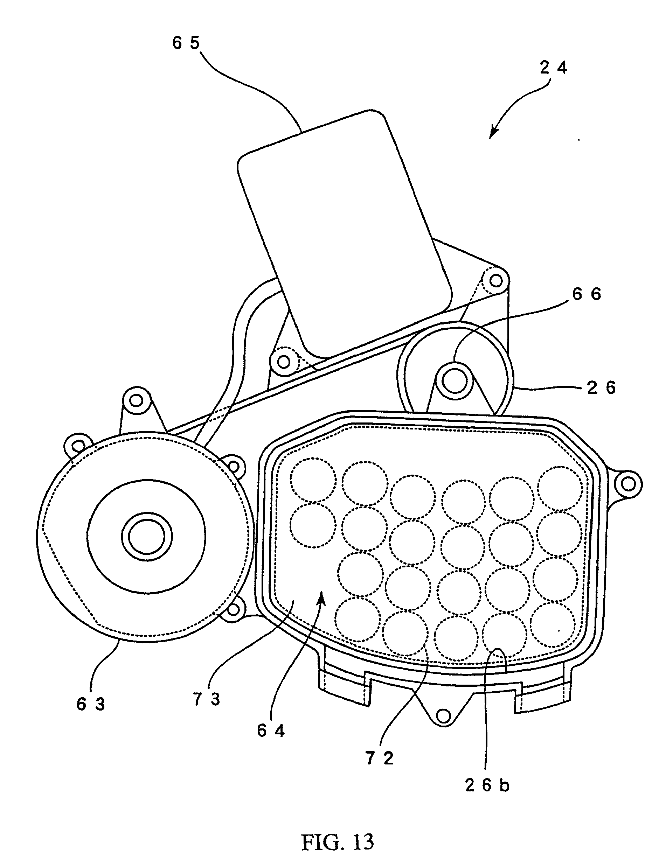

FIG. 10 is a side view of a vehicle body constitution of a motorcycle with the electric motor type power unit. FIG. 11 shows a vertical cross section of the rear wheel. FIG. 12 is a side view of the central part of the disk type wheel as seen from the vehicle body left hand side. FIG. 13 is a side view of the power unit. In these drawings, components that are the same as or similar to those shown in FIGs. 1 to 4 are provided with the same symbols and their detailed descriptions are omitted.

As shown in FIG. 11, the rear wheel 3 of the motorcycle 1 of this embodiment comprises a disk type wheel 44 integrally comprising a rim 41, spoke 42, and a hub 43. The wheel 44 is supported through the wheel shaft 20 on the rear wheel support bracket 18 so that the spoke 42 is located on the left hand side (right hand side in the figure) of the vehicle body. The rear wheel 3 is rotated relative to the wheel shaft 20 as the power of the power unit 24, to be described later, is transmitted to the driven pulley 61 formed integrally with the spoke 42.

The disk type wheel 44 of this embodiment is constituted with a disk-shaped cover 62 made of a plastic material and secured to the outside surface of the spoke 42 to prevent water from entering inside the rear wheel 3 through spaces among the spokes 42.

Also in this embodiment, the power unit 24 is housed radially inside the rear wheel 3 and covered with the cover 37 (See FIGs. 10 and 11) from the side of the vehicle body. As shown in FIG. 13, the power unit 24 is formed with the power unit bracket 26 to which are attached an electric motor 63, a battery 64, and a controller 65 for the electric motor.

In this embodiment, the boss 66 shown in FIGs. 11 and 13 of the power unit bracket 26 is supported with the wheel shaft 20. The front upper part, with respect to the vehicle body, of the bracket 26 is supported with the rear wheel support bracket 18 located on the left hand side of the vehicle body. The electric motor 63 is secured to the front lower part of the power unit bracket 26. The battery 64 is detachably attached to the bracket 26 in a position below the wheel shaft 20. The controller 65 of a relatively light weight is attached above the wheel shaft 20.

The electric motor 63 is attached to the power unit bracket 26 so that its axis is parallel to the vehicle width direction. As shown in FIG. 11, the rotary shaft 63a of the electric motor 63 is made to project on the vehicle body right hand side. As shown in FIG. 12, the rotary shaft 63a is connected through a belt 67 to the driven pulley 61 of the disk type wheel 44. In FIG. 12 are shown two tension pulleys 68, 69, located near the rotary shaft 63a, for providing a tensile force to the belt 67. The pulleys 68, 69 are rotatably attached to an arm 70, and supported through the arm 70 on the power unit bracket 26. The arm 70 is rotatably attached to a support shaft 71 of the power unit bracket 26 and spring-forced clockwise as seen in FIG. 12 with a tension spring (not shown).

As shown in FIG. 13, the battery 64 is constituted with a large number of cells 72 (individual cells) and a battery case 73 for holding the cells 72, and housed in a battery accommodating space 26b (See FIG. 11) of the power unit bracket 26. An opening 74 (See FIG. 11) for putting in and taking out the battery is formed in part, facing the battery 64, of the cover 37 for the rear wheel 3 so that the battery 64 can be installed and removed. The opening 74 can be opened and closed with a lid 75 (See FIGs. 10 and 11) detachably attached to the power unit bracket 26.

The controller 65 employs a circuit for controlling the rotation speed of the electric motor 63 so as to correspond to the operation amount of the throttle grip or the thumb throttle provided on the steering handlebar 13.

Constituting the rear wheel 3 as shown in this embodiment also provides the same effect as with the first embodiment.

The above embodiments are shown as examples in which the rear wheel 3 is provided with the power unit 24. However, the motorcycle associated with this invention may employ a constitution in which the front wheel 2 is provided with the power unit 24. Moreover, the respective disk type wheels 23 or 44 may be provided at that side of the vehicle body opposite to the described one.

With this invention as described above, the outside diameter of the wheel is nearly the same as that of the bicycle for adults, and the vehicle body shape is nearly the same as that of the bicycle. Therefore, feeling during driving is almost the same as that with the bicycle, and drive stability is also excellent. Therefore, those who are used to riding the bicycle can drive the motorcycle of the invention without unfamiliar feeling.

The vehicle width of this motorcycle is the same as that of the bicycle. The height of the line of sight is high because the driver stands on the footboard. Such factors make it possible to drive through jammed cars. Even driving through such narrow places is easy. Push-walking is also easy. In spite of the large diameter of the wheel, the footboard is located low. Therefore, retracting the ground-contact foot when starting the driving and placing the foot on the ground when stopping are made very easy, and these actions can be made without bending and stretching knees by a large amount. As the wheel diameter is large, the roomy space formed radially inside the wheel is utilized to mount the power unit without interfering with the footboard. As a result, the footboard can be made long in the front-rear direction of the vehicle body, the space for placing feet can be taken widely. Therefore, the degree of freedom in designing the footboard increases, and driving operation is made all the more easy.

With another embodiment of the invention, it possible to support the hip of the rider standing on the footboard with the hip support member and to perform operation of banking the vehicle and the rider together as a single body as on a curved road in a stabilized manner. Moreover, the fatigue of the rider is reduced.

With a further embodiment of the invention, the engine can be mounted while a constitution is employed in which the footboard is made long in the front-rear direction. Therefore, it is possible to drive a long distance with the engine power. Another advantage is that, since the footboard is long in the front-rear direction, positions of feet can be chosen freely so that fatigue is reduced even in a long time of drive.

With a still further embodiment of the invention, the electric motor that is relatively low in noise and vibration can be mounted while the constitution is employed in which the footboard is made long in the front-rear direction. That the footboard is long in the front-rear direction makes it possible to choose the positions of the feet freely and drive quietly in a relaxed posture with less fatigue.

## Claims

1. Motorcycle (1) for a rider (5) to ride in a standing posture on a planar footboard (4) disposed between front and rear wheels, said front and rear wheels (2,3) having an outside diameter approximately equal to that of bicycles for adults, **characterized in that** the footboard (4) being formed integrally with a vehicle body cover (7), which vehicle body cover (7) is formed to cover the rear wheel (3) and a vehicle body frame (8), whereas part of the vehicle body cover (7) is constructed to generally cover the upper half of the rear wheel (3).

2. Motorcycle according to claim 1, **characterized in that** the footboard (4) being arranged such that the upper edges of the front and rear wheels (2,3) are located approximately at the same height as the knees of a standing rider (5).

3. Motorcycle according to claim 1 or 2, **characterized in that** a first distance (H1) between the footboard (4) and a ground surface (G) is shorter than a second distance (H2) between each wheel shaft (19,20) and the ground surface (G).

4. Motorcycle according to at least one of the preceding claims 1 to 3, **characterized in that** a power unit (24) is accommodated in either the front wheel (2) or the rear wheel (3).

5. Motorcycle according to at least one of the preceding claims 1 to 4, **characterized in that** the overall width of the motorcycle body except for steering handlebars (13) is smaller than the width of a hip (5c) of a rider (5).

6. Motorcycle according to at least one of the preceding claims 1 to 5, **characterized by** a hip support member (21) extending upward from a rear part of the footboard (4).

7. Motorcycle according to claim 6, **characterized in that** said hip support member (21) comprising two pipes (21 a) extending from main pipes (16) of a body frame (8) upward, and a lateral pipe (21 b) connected to the upper ends of said two pipes (21 a).

8. Motorcycle according to at least one of the preceding claims 4 to 7, **characterized in that** a power source of the power unit (24) is an internal combustion engine (6), and a power transmission train from the internal combustion engine (6) to the respective wheel (2,3) and auxiliary devices for the internal combustion engine (6) are disposed radially inside said respective wheel (2,3).

9. Motorcycle according to at least one of the preceding claims 4 to 7, **characterized in that** a power source of the power unit (24) is an electric motor (63), and a power transmission train from the electric motor (63) to the respective wheel (2,3) and auxiliary devices for the electric motor (63) are disposed radially inside said respective wheel (2,3).

10. Motorcycle according to at least one of the preceding claims 4 to 9, **characterized in that** the respective power unit (24) accommodating wheel (2,3) being provided with a disk type wheel (23;44) either provided on the right or left hand side of the vehicle body, respectively.

11. Motorcycle according to claim 10, **characterized in that** said disk type wheel (44) comprising a rim (41), a spoke (42), and a hub (43).

12. Motorcycle according to claim 11, **characterized in that** the vehicle body cover (7) comprising a detachable sub-cover (9) covering the upper half of the rear wheel (3) on the right or left hand side, respectively.

13. Motorcycle according to at least one of the preceding claims 4 to 12, **characterized by** a cover (37) covering the right or left hand side of the power unit (24) accommodating wheel (2,3), except for a tire (25), said cover (37) being attached to a power unit bracket (26).

## Patentansprüche

1. Motorrad (1) für einen Fahrer (5), um in einer Stehhaltung auf einem ebenen Trittbrett (4) zu fahren, das zwischen dem Vorder- und dem Hinterrad angeordnet ist, wobei das Vorder- und das Hinterrad (2, 3) einen Außendurchmesser ungefähr gleich zu dem des Fahrrades für Erwachsene hat, **dadurch gekennzeichnet, dass** das Trittbrett (4) mit einer Fahrzeugkörperabdeckung (7) einstückig gebildet ist, wobei die Fahrzeugkörperabdeckung (7) gebildet ist, um das Hinterrad (3) und einen Fahrzeugkörperrahmen (8) abzudecken, während ein Teil der Fahrzeugkörperabdeckung (7) aufgebaut ist, um im Wesentlichen die obere Hälfte des Hinterrades (3) abzudecken.

2. Motorrad nach Anspruch 1, **dadurch gekennzeichnet, dass** das Trittbrett (4) derart angeordnet ist, dass die oberen Kanten des Vorder- und des Hinterrades (2, 3) ungefähr auf derselben Höhe wie die Knie eines stehenden Fahrers (5) angeordnet sind.

3. Motorrad nach Anspruch 1 oder 2, **dadurch gekennzeichnet, dass** ein erster Abstand (H1) zwischen dem Trittbrett (4) und einer Bodenoberfläche (G) kürzer als ein zweiter Abstand (H2) zwischen jeder Radwelle (19, 20) und der Bodenoberfläche (G) ist.

4. Motorrad nach zumindest einem der vorhergehenden Ansprüche 1 bis 3, **dadurch gekennzeichnet, dass** eine Antriebseinheit (24) in entweder dem Vorderrad (2) oder dem Hinterrad (3) aufgenommen ist.

5. Motorrad nach zumindest einem der vorhergehenden Ansprüche 1 bis 4, **dadurch gekennzeichnet, dass** die gesamte Breite des Motorradkörpers mit Ausnahme der Lenkstangen (13) kleiner als die Breite einer Hüfte (5c) eines Fahrers (5) ist.

6. Motorrad nach zumindest einem der vorhergehenden Ansprüche 1 bis 5, **gekennzeichnet durch** ein Hüftunterstützungsteil (21), das sich von einem hinteren Teil des Trittbrettes (4) nach oben erstreckt.

7. Motorrad nach Anspruch , **dadurch gekennzeichnet, dass** das Hüftunterstützungsteil (21) zwei Rohre (21 a) aufweist, die sich von Hauptrohren (16) eines Körperrahmens (8) nach oben erstrecken, und ein Seitenrohr (21 b), das mit den oberen Enden der zwei Rohre (21 a) verbunden ist.

8. Motorrad nach zumindest einem der vorhergehenden Ansprüche 4 bis 7, **dadurch gekennzeichnet, dass** eine Energiequelle der Antriebseinheit (24) eine Brennkraftmaschine (6) ist und ein Kraftübertragungszug von der Brennkraftmaschine (6) zu dem jeweiligen Rad (2, 3) und Hilfseinrichtungen für die Brennkraftmaschine (6) radial innerhalb des jeweiligen Rades (2, 3) angeordnet ist.

9. Motorrad nach zumindest einem der vorhergehenden Ansprüche 4 bis 7, **dadurch gekennzeichnet, dass** eine Energiequelle der Antriebseinheit (24) ein Elektromotor (63) ist und ein Kraftübertragungszug von dem Elektromotor (63) zu dem jeweiligen Rad (2, 3) und Hilfseinrichtungen für die Brennkraftmaschine (6) radial innerhalb des jeweiligen Rades (2, 3) angeordnet ist.

10. Motorrad nach zumindest einem der vorhergehenden Ansprüche 4 bis 9, **dadurch gekennzeichnet, dass** ein die jeweilige Antriebseinheit (24) aufnehmendes Rad (2, 3) mit einem Rad (23; 44) von einem Scheibentyp versehen ist, entweder auf der rechten oder linken Seite des Fahrzeugkörpers vorgesehen.

11. Motorrad nach Anspruch 10, **dadurch gekennzeichnet, dass** das Rad vom Scheibentyp (44) einen Rand (41), eine Speiche (42) und eine Nabe (43) aufweist.

12. Motorrad nach Anspruch 11, **dadurch gekennzeichnet, dass** die Fahrzeugkörperabdeckung (7) eine lösbare Sub- Abdeckung (9) aufweist, die jeweils die obere Hälfte des Hinterrades (3) auf der rechten und linken Seite abdeckt.

13. Motorrad nach zumindest einem der vorhergehenden Ansprüche 4 bis 12, **gekennzeichnet durch** eine Abdeckung (37), die die rechte oder linke Seite des die Antriebseinheit (24) aufnehmenden Rades (2, 3) mit Ausnahme eines Reifens abdeckt, wobei die Abdeckung (37) mit einer Antriebseinheitshalterung (26) verbunden ist.

## Revendications

1. Motocycle (1) destiné à permettre à un conducteur (5) une conduite en position debout sur un repose -pieds plan (4) disposé entre des roues avant et arrière, lesdites roues avant et arrière (2, 3) ayant un diamètre extérieur approximative ment égal à celui de roues de bicyclettes pour adultes, **caractérisé en ce que** le repose-pieds (4) est intégralement formé avec un capot de corps de véhicule (7), lequel capot de corps de véhicule (7) est formé de manière à recouvrir la roue arrière (3) et un cadre de corps de véhicule (8), alors qu'une partie du capot de corps de véhicule (7) est construit de manière à recouvrir de manière générale la moitié supérieure de la roue arrière (3).

2. Motocycle selon la revendication 1, **caractérisé en ce que** le repose-pieds (4) est aménagé de telle sorte que les bords supérieurs des roues avant et arrière (2, 3) se situent approximativement à la même hauteur que les genoux d'un conducteur en position debout (5).

3. Motocycle selon la revendication 1 ou la revendication 2, **caractérisé en ce qu'**une première distance (H1) entre le repose -pieds (4) et une surface du sol (G) est plus courte qu'une seconde distance (H2) entre chaque axe de roue (19, 20) et la surface du sol (G).

4. Motocycle selon au moins l'une des revendications précédentes 1 à 3, **caractérisé en ce qu'**une unité de puissance (24) est logée dans l'une ou l'autre de la roue avant (2) ou de la roue arrière (3).

5. Motocycle selon au moins l'une des revendications précédentes 1 à 4, **caractérisé en ce que** la largeur hors tout du corps de motocycle, à l'exception du guidon de direction (13), est plus petite que la largeur d'une hanche (5c) d'un conducteur (5).

6. Motocycle selon au moins l'une des revendications précédentes 1 à 5, **caractérisé en ce qu'**un élément de support de hanche (21) s'étend vers le haut à partir d'une partie arrière du repose-pieds (4).

7. Motocycle selon la revendication 6, **caractérisé en ce que** ledit élément de support de hanche (21) se compose de deux tubes (21a) qui s'étendent vers le haut à partir de tubes principaux (16) d'un cadre de corps (8), et d'un tube latéral (21b) connecté aux extrémités supérieures desdits deux tubes (21a).

8. Motocycle selon au moins l'une des revendications précédentes 4 à 7, **caractérisé en ce qu'**une source de puissance de l'unité de puissance (24) est un moteur à combustion interne (6), et qu'un système de transmission de puissance entre le moteur à combustion interne (6) et la roue respective (2, 3) et des dispositifs auxiliaires du moteur à combustion interne (6) sont disposés dans le sens radial à l'intérieur de ladite roue respective (2, 3).

9. Motocycle selon au moins l'une des revendications précédentes 4 à 7, **caractérisé en ce qu'**une source de puissance de l'unité de puissance (24) est un moteur électrique (63), et qu'un système de transmission de puissance entre le moteur électrique (63) et la roue respective (2, 3) et des dispositifs auxiliaires du moteur électrique (63) sont disposés dans le sens radial à l'intérieur de ladite roue respective (2, 3).

10. Motocycle selon au moins l'une des revendications précédentes 4 à 9, **caractérisé en ce que** l'unité de puissance respective (24), qui reçoit une roue (2, 3), comporte une roue de type à disque (23 ; 44) aménagée respectivement, soit du côté droit, soit du côté gauche du corps de véhicule.

11. Motocycle selon la revendication 10, **caractérisé en ce que** la roue de type à disque (44) comprend une jante (41), un rayon (42) et un moyeu (43).

12. Motocycle selon la revendication 11, **caractérisé en ce que** le capot de corps de véhicule (7) se compose d'un capot intermédiaire amovible (9) qui recouvre la moitié supérieure de la roue arrière (3) respectivement sur le côté gauche ou sur le côté droit.

13. Motocycle selon au moins l'une des revendications précédentes 4 à 12, **caractérisé par** un capot (37) qui recouvre le côté droit ou le côté gauche de l'unité de puissance (24) qui reçoit une roue (2, 3), à l'exception d'un pneumatique (25), ledit capot (37) étant fixé sur un support d'unité de puissance (26).
